Europäisches Patentamt

European Patent Office

Office européen des brevets

(19)

(11) Numéro de publication : **0 026 002**
**B1**

(12)

# FASCICULE DE BREVET EUROPÉEN

(45) Date de publication du fascicule du brevet :
25.07.84

(21) Numéro de dépôt : 80105732.4

(22) Date de dépôt : 24.09.80

(51) Int. Cl.³ : **G 04 C 3/14, H 02 P 8/00, H 02 K 37/00**

(54) **Moteur pas à pas monophasé bipolaire à deux sens de rotation.**

(30) Priorité : 25.09.79 FR 7924359

(43) Date de publication de la demande :
01.04.81 Bulletin 81/13

(45) Mention de la délivrance du brevet :
25.07.84 Bulletin 84/30

(84) Etats contractants désignés :
CH DE GB IT LI

(56) Documents cités :
DE-A- 1 513 747
DE-A- 1 538 705
DE-A- 1 788 126
FR-A- 2 209 251
FR-A- 2 238 179
US-A- 3 810 354

(73) Titulaire : **SOCIETE SUISSE POUR L'INDUSTRIE
HORLOGERE MANAGEMENT SERVICES S.A.
Rue Stämpfli 96
CH-2500 Bienne (CH)**

(72) Inventeur : **Tu Xuan, Mai
Rue Blancherie 18
CH-1022 Chavannes (CH)**

(74) Mandataire : **Coutts, William Robert
SSIH Management Services S.A. Patent Service Rue
Stämpfli 96
CH-2500 Bienne (CH)**

# 0 026 002

## Description

La présente invention concerne un moteur électromagnétique pas à pas monophasé bipolaire, pour pièce d'horlogerie, à mouvement rotatif à deux sens de rotation, comprenant un stator réalisé en matériau ferromagnétique doux et un rotor constitué par un aimant ayant au moins une paire de pôles.

Des moteurs électromagnétiques pas à pas monophasés bipolaires à deux sens de rotation sont connus et pour remédier aux inconvénients qu'ils présentent, la requérante a proposé une solution nouvelle dans sa demande de brevet qui porte le numéro d'enregistrement national français 79 06 030 et qui revendique le fait que le moment d'inertie, le volume et le nombre de paires de pôles du rotor sont combinés pour satisfaire à une certaine relation mathématique et que ledit rotor est entraîné dans un sens de rotation inverse au sens préférentiel de marche quand la bobine du moteur reçoit des impulsions doubles de polarité alternée composées d'une première impulsion dont la polarité fait tourner le rotor d'un angle inférieur à un pas dans le sens préférentiel, ladite première impulsion étant immédiatement suivie par une seconde impulsion dont la polarité est opposée à la première, ladite seconde impulsion faisant tourner le rotor d'un pas entier dans le sens opposé au sens préférentiel.

L'invention qui vient d'être citée s'applique essentiellement à une pièce d'horlogerie ne comportant qu'une aiguille des heures et une aiguille des minutes, c'est-à-dire à un moteur dont le rotor n'avance que d'un pas par minute. En effet, l'alourdissement proposé du rotor et partant la sûreté de marche dans les deux sens doit se payer par une augmentation de la consommation du moteur même en marche avant normale de la montre. Il s'en suit que ce type de moteur convient moins bien à une montre munie d'une aiguille des secondes où le rotor fait un pas par seconde. L'invention citée exige également que la bobine du moteur soit attaquée par un type d'impulsions composites et alternées, ce qui rend plus difficile la réalisaiton de son alimentation.

C'est le but de la présente invention de proposer un moteur pas à pas monophasé bipolaire avec marche dans les deux sens de rotation qui remédie aux inconvénients cités dans lequel la consommation n'excède pas celle d'un moteur optimisé pour la marche avant seulement et dans lequel la bobine du moteur est attaquée par un type d'impulsion simple et alternée.

C'est un autre but de la présente invention d'assurer un couple en marche arrière plus confortable que celui obtenu avec les systèmes de l'art antérieur et d'éviter un détecteur de force contre-électromotrice comme il est prévu dans certains de ces systèmes.

Ces buts sont atteints grâce aux moyens revendiqués.

L'invention sera mieux comprise à la lumière de la description qui suit et des dessins dans lesquels :

Les figures 1a, 1b et 1c représentent respectivement une exécution de principe d'un moteur monophasé, le signal d'attaque de ce moteur et la valeur des couples en fonction de l'angle de rotation du rotor pour le sens préférentiel et selon l'art antérieur.

La figure 2 représente la valeur des couples en fonction de l'angle de rotation du rotor si les impulsions d'attaque sont de polarité inverse à celle dessinée sous figure 1b.

La figure 3 représente une première variante d'une exécution de principe du moteur selon l'invention.

La figure 4 représente une seconde variante d'exécution de principe du moteur selon l'invention.

Les figures 5a et 5b sont des diagrammes qui montrent le fonctionnement du moteur dans le sens préférentiel en réponse à une impulsion normale, les deux bobines du moteur étant couplées en série selon l'invention.

Les figures 6a et 6b sont des diagrammes qui montrent le fonctionnement du moteur dans le sens préférentiel en réponse à une impulsion de sens opposé à l'impulsion normale, les deux bobines du moteur étant couplées en série selon l'invention.

Les figures 7a et 7b sont des diagrammes qui montrent le fonctionnement du moteur dans le sens opposé au sens préférentiel en réponse à une impulsion normale, les deux bobines du moteur étant branchées en parallèle selon l'invention.

Les figures 8a et 8b sont des diagrammes qui montrent le fonctionnement du moteur dans le sens opposé au sens préférentiel en réponse à une impulsion de sens opposé à l'impulsion normale, les deux bobines du moteur étant couplées en parallèle selon l'invention.

La figure 9 représente le signal d'attaque du moteur pour la marche dans le sens opposé au sens préférentiel.

La figure 10 montre un schéma d'alimentation du moteur selon l'invention.

La figure 1a représente, très schématisée, une exécution de principe d'un moteur pas à pas monophasé bipolaire de type connu. Un aimant permanent cylindrique 1 à alimentation diamétrale SN constitue le rotor de ce moteur. Son stator est composé d'une bobine 2 à un seul enroulement qui, lorsqu'elle est excitée, produit un flux magnétique qui est reporté à l'entrefer au moyen du noyau 3 et des pièces polaires 4a et 4b réalisées en matériau ferromagnétique doux. A l'arrêt, le rotor occupe la position de réluctance minimum telle qu'elle est montrée sur la figure 1a. Si une impulsion positive est envoyée à la bobine, le rotor tournera d'un pas, c'est-à-dire de 180° ; une seconde impulsion, mais négative, permettra au rotor de poursuivre sa course dans le même sens et de franchir ainsi un nouveau pas et ainsi de suite. C'est ce qu'on appelle le sens préférentiel.

2

**0 026 002**

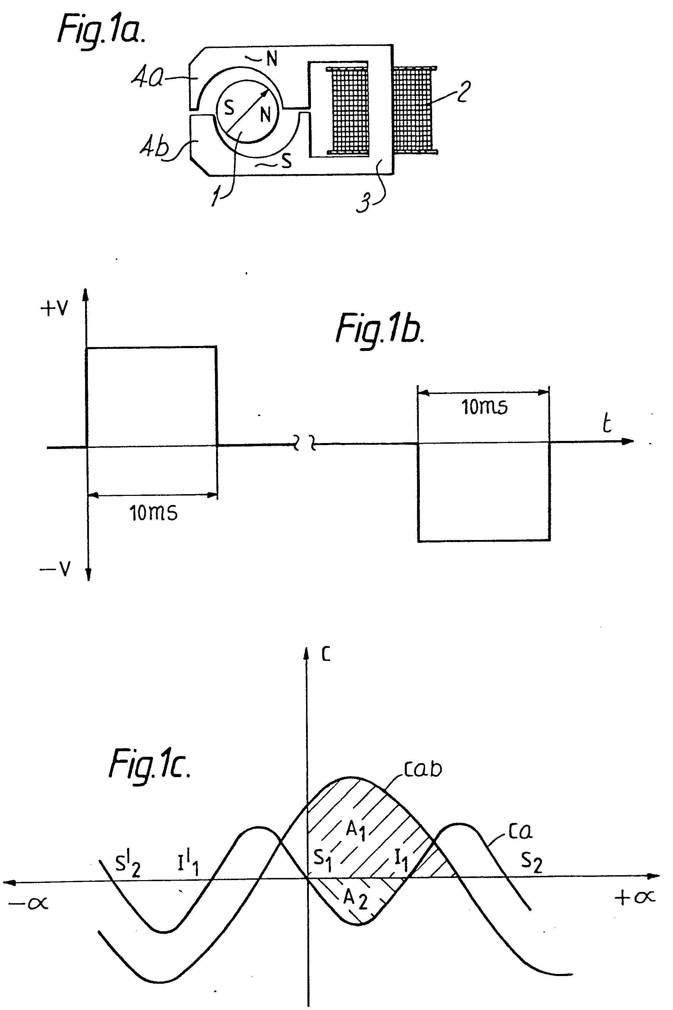

La figure 1b représente, en fonction du temps, un premier type d'impulsions simples de polarité alternée qui font avancer le moteur dans le sens préférentiel. La durée de chaque impulsion est généralement comprise entre 4 et 12 ms selon le moteur choisi.

La figure 1c représente la valeur des couples C qui agissent sur le rotor en fonction de son angle de rotation $\alpha$. Le sens préférentiel est celui des valeurs positives de l'angle de rotation $\alpha$ et le sens opposé au sens préférentiel est celui des valeurs négatives de l'angle de rotation $\alpha$. Comme il est connu, le rotor du moteur est soumis à deux sortes de couples : un couple statique de maintien Ca dû à l'aimant seul et un couple dynamique moteur Cab dû à l'interaction du flux de l'aimant avec le flux de la bobine lorsque celle-ci est alimentée. De par la construction du moteur, ces couples sont déphasés de 45° environ l'un par rapport à l'autre. Si une impulsion positive alimente la bobine, le pôle 4a deviendra un pôle nord et le pôle 4b, un pôle sud (voir figure 1a) et le rotor tournera de 180° dans le sens des aiguilles d'une montre. Les points $S'_2$, $S_1$ et $S_2$ sont des points d'équilibre stable en l'absence de courant (le point $S_1$ représentant la position du rotor telle que dessinée sur la figure 1a), alors que les points $I'_1$ et $I_1$ sont des points d'équilibre instable. Dans le sens préférentiel, le rotor est amené du point $S_1$ au point $I_1$ par le couple mutuel Cab, le reste du parcours, de $I_1$ à $S_2$, se faisant grâce aux énergies cinétique et potentielle emmagasinées entre $S_1$ et $I_1$. La surface $A_1$ représente l'énergie utile que l'on peut fournir au moteur dans le sens préférentiel. La surface $A_2$ représente l'énergie de maintien ou de positionnement (à laquelle il faut ajouter l'énergie due aux pertes par frottement). Comme ces deux énergies sont de sens opposés, il est nécessaire, pour que le rotor avance d'un pas, que $A_1$ soit supérieure à $A_2$, ce qui est le cas pour les moteurs pas à pas du type connu.

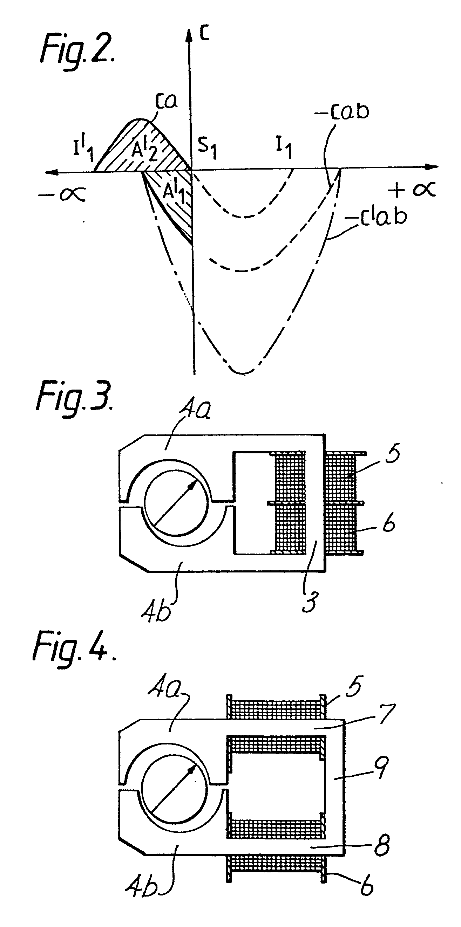

La figure 2 représente la valeur des couples en fonction de l'angle de rotation du rotor si les impulsions d'attaque sont de polarité inverse à celle dessinée à la figure 1b. On peut se demander en effet si, dans le mode d'alimentation connu de la figure 1b, il ne suffirait pas, pour atteindre le but fixé ici d'inverser la polarité du signal de commande pour inverser le sens de marche du moteur. La figure 2 montre à nouveau le couple de maintien Ca dont la polarité et l'amplitude n'ont pas changé puisque dépendantes de l'aimant seulement. L'amplitude du couple mutuel − Cab est également la même puisque résultante d'une impulsion de même amplitude, mais sa polarité est inversée puisque résultante d'une impulsion de polarité opposée. On remarque ici que l'énergie utile que l'on peut fournir au moteur, représentée par la surface $A'_1$ est plus petite que l'énergie de maintien $A'_2$. En conséquence, le rotor n'est pas capable de tourner d'un pas dans le sens opposé au sens préférentiel. On pourrait atteindre le but fixé en augmentant l'amplitude de l'impulsion, ce qui amènerait le couple − C'ab, mais ceci constituerait un inconvénient majeur pour la réalisation de l'alimentation de commande.

La figure 3 représente une première variante d'exécution de principe du moteur selon l'invention. Elle se distingue de l'exécution de l'art antérieur présentée en figure 1a par le fait que le stator du moteur porte, sur son noyau 3, deux enroulements 5 et 6 bobinés côte à côte. Dans un exemple de bobinage, et pour le moteur dont on expliquera le fonctionnement plus loin, chaque enroulement comporte 7 500 spires, la résistance et l'inductance d'un enroulement valant 1 900 ohms et 1,63 henrys respectivement. Cette première variante peut comporter une sous-variante si les enroulements, au lieu d'être disposés l'un à côté de l'autre, sont bobinés l'un sur l'autre.

La figure 4 représente une seconde variante d'exécution de principe du moteur selon l'invention. Par rapport à la figure 1a, on voit que le circuit magnétique comporte, outre les pièces polaires 4a et 4b et la culasse 9, deux noyaux 7 et 8 sur lesquels sont bobinés les enroulements 5 et 6.

D'autres variantes de moteur pourraient être imaginées sans pour autant s'écarter de l'objet de l'invention pourvu qu'elles comprennent, sur un même circuit magnétique, deux enroulements distincts.

L'invention est basée sur le principe de la mise en série ou en parallèle des deux dits enroulements suivant que l'on désire que le moteur tourne dans le sens préférentiel ou dans le sens opposé au sens préférentiel respectivement. Par sens préférentiel, il faut entendre celui pour lequel la consommation du moteur est faible et partant celui qui est utilisé pour la marche normale de la montre. Par sens opposé au sens préférentiel, il faut entendre celui pour lequel la consommation du moteur est plus forte et partant celui qui est utilisé pour faire tourner occasionnellement les aiguilles dans le sens inverse au sens normal, par exemple lorsqu'on désire mettre la montre à l'heure ou changer de fuseau horaire.

Le principe de fonctionnement du moteur sera maintenant expliqué au moyen des graphiques 5a à 8b qui montrent quatre cas qui peuvent se présenter, deux dans le sens préférentiel et deux dans le sens opposé au sens préférentiel.

## Sens préférentiel

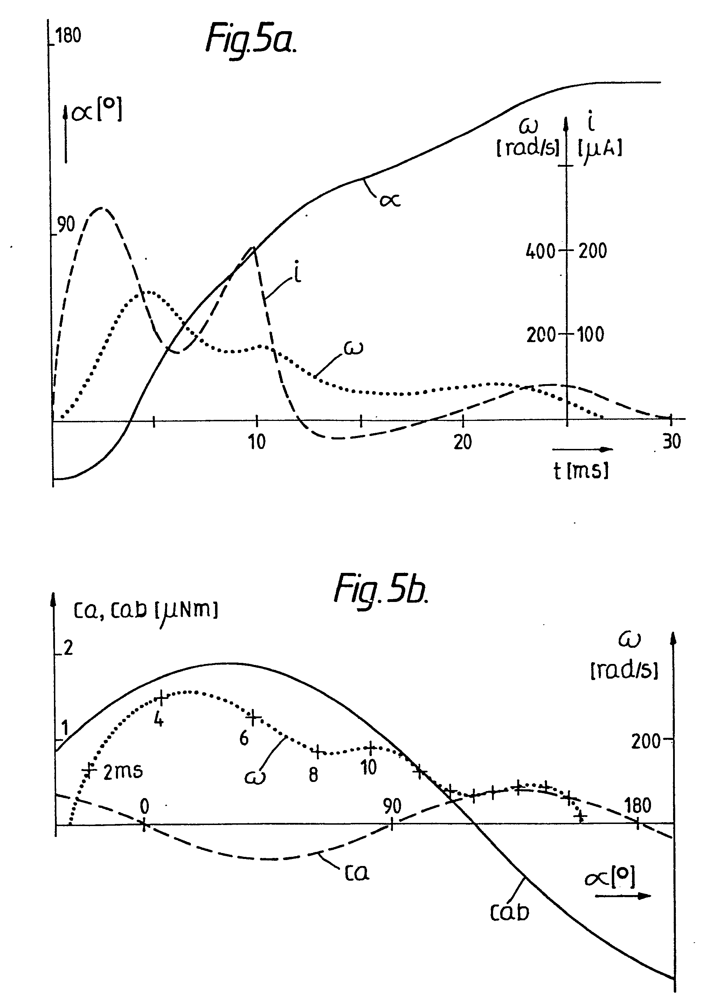

Cas 1. Le moteur est alimenté par les impulsions simples et alternées de la figure 1b. Dans l'exemple choisi et pour un moteur donné, les impulsions ont une durée de 10 ms correspondant à une optimisation de la marche du moteur pour laquelle le rendement est maximum. Les enroulements 5 et 6 des moteurs présentés en figures 3 et 4 sont couplés en série au moyen d'un système de commutateurs qui sera décrit plus loin. Avec les valeurs mentionnées plus haut pour les enroulements, la résistance est de R = 3 800 $\Omega$, le nombre de spires W = 15 000 et l'inductance L = 6,52 H. Si l'on admet pour ce type de moteur un couple mutuel Cab par ampère-tour de $3{,}2 \cdot 10^{-7}$ volt-seconde (Vs), le facteur de couplage qui se définit par le couple mutuel par ampère-tour fois le nombre de spires vaut Cab/i = $4{,}8 \cdot 10^{-3}$ Vs. La figure 5a

3

représente le courant i, l'angle $\alpha$ et la vitesse angulaire $\omega$ en fonction du temps pour un couple utile de 0,3 $\mu$ Nm dans le sens préférentiel. L'examen de la courbe du courant i dans la bobine montre que l'alimentation a lieu pendant 10 ms et qu'à partir de ce moment là la bobine est mise en court-circuit, ce qui a pour but d'amortir le mouvement résiduel du rotor en fin de pas. La courbe $\alpha$ montre que le rotor a progressé d'un pas ($\alpha = +180°$) et après environ 30 ms le rotor s'est stabilisé à son nouveau point de stationnement comme l'indique aussi la vitesse angulaire $\omega$ qui est tombée à zéro. La figure 5b représente les diagrammes des couples moteur (Cab) et de positionnement (Ca) ainsi que la vitesse angulaire $\omega$ en fonction de la position angulaire $\alpha$ du rotor et pour les mêmes conditions de charge de 0,3 $\mu$ Nm. Le diagramme $\omega$ porte en plus une échelle en temps qui permet de se rendre compte à quel moment est atteinte la vitesse $\omega$ du rotor pour une position angulaire $\alpha$ donnée. Ce premier cas est celui qui se présente dans la marche normale de la pièce d'horlogerie.

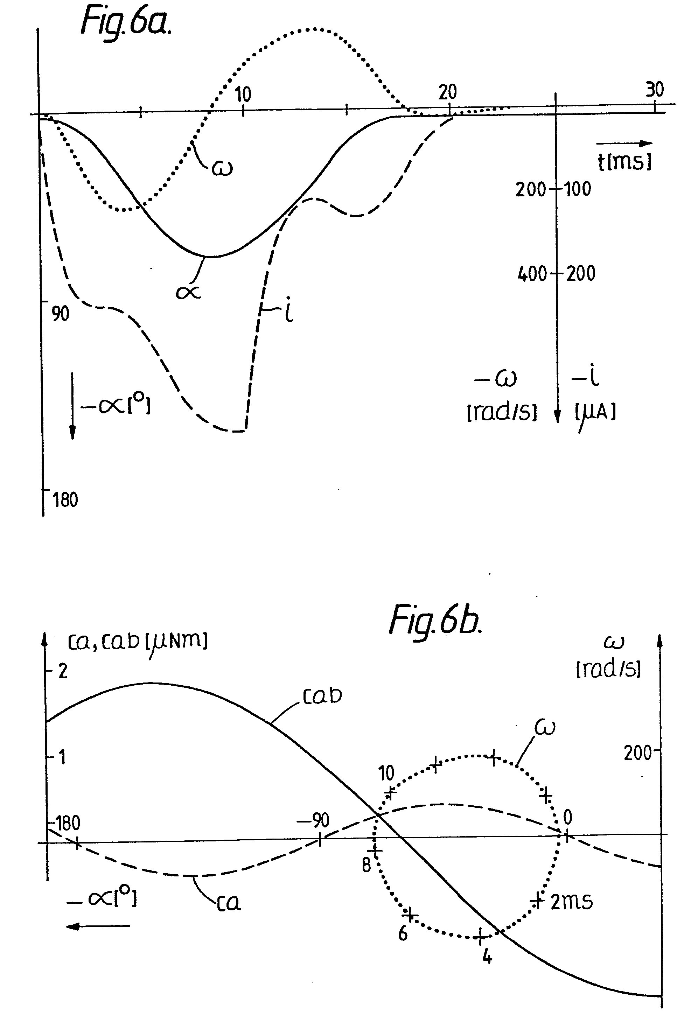

Cas 2. On suppose maintenant qu'à la suite d'un choc, par exemple, le rotor a progressé accidentellement d'un pas. On se trouvera alors dans la situation étudiée à propos de la figure 2. Le moteur va recevoir une impulsion négative qui aurait tendance à le faire reculer d'un pas. Les figures 6a et 6b montrent comment réagit le moteur à cette impulsion négative, toutes les autres conditions de couplage des enroulements étant égales à celles décrites dans le cas 1 ci-dessus. Les courbes $\alpha$ et $\omega$ illustrent le fait que pendant un certain temps (de 0 à 8 ms) le rotor se déplace dans le sens opposé au sens préférentiel pour revenir à son point de départ (de 8 à 18 ms) et que ses énergies potentielle et cinétique ne lui ont pas permis de franchir le point d'équilibre instable situé à $\alpha = -90°$. La prochaine impulsion, positive cette fois-ci, replacera le moteur dans les conditions de fonctionnement normales expliquées à propos du cas 1 et l'entraînera dans le sens préférentiel.

## Sens opposé au sens préférentiel

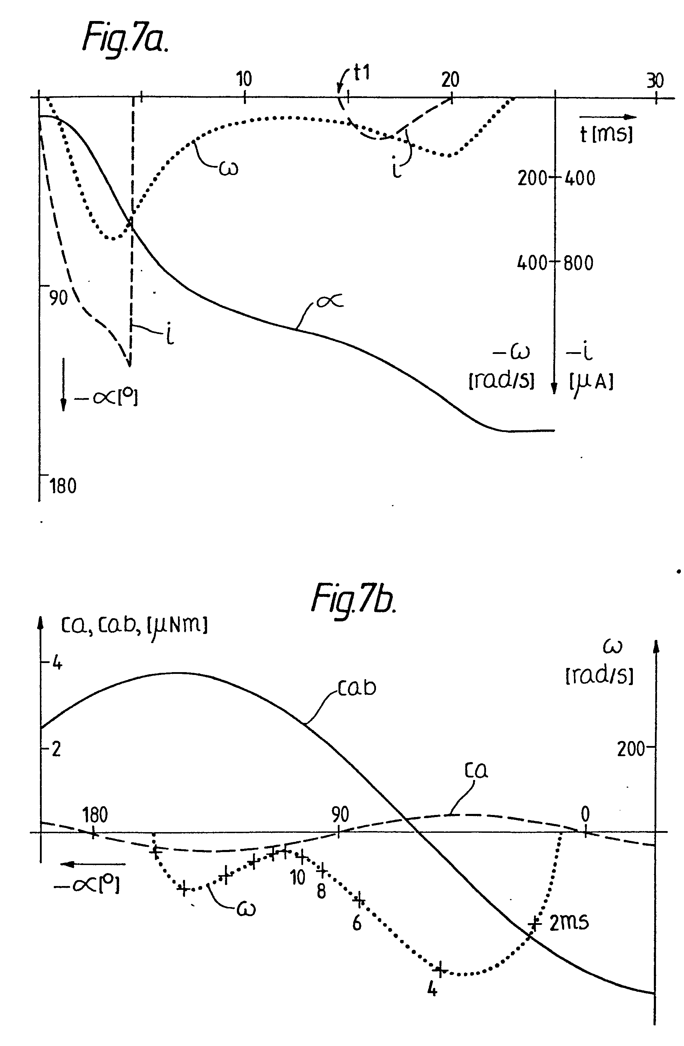

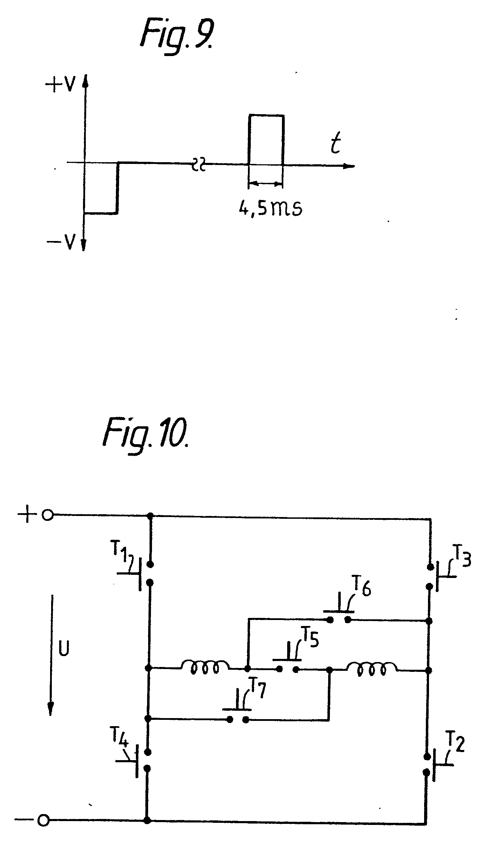

Cas 3. Le moteur est alimenté par les impulsions simples et alternées montrées en figure 9. Pour le même moteur donné, les impulsions ont une durée de 4,5 ms. Les enroulements 5 et 6 des moteurs présentés en figures 3 et 4 sont couplés en parallèle. Avec les valeurs mentionnées plus haut pour les enroulements, la résistance est de R = 950 $\Omega$, le nombre de spires W = 7 500 et l'inductance L = 1,63 H. Avec la même valeur de couple mutuel Cab par ampère-tour de $3,2 \cdot 10^{-7}$ Vs, le facteur de couplage est réduit à $2,4 \cdot 10^{-3}$ Vs. La figure 7a représente le courant i, l'angle $\alpha$ et la vitesse angulaire $\omega$ en fonciton du temps pour un couple utile de 0,2 $\mu$ Nm dans le sens opposé au sens préférentiel. L'examen de la courbe du courant i dans la bobine montre que l'alimentation a lieu pendant 4,5 ms et qu'à partir de ce moment-là la bobine est mise en circuit ouvert jusqu'à un temps $t_1$ ($t_1$ = 14,5 ms), ce qui a pour but d'éviter le freinage dû au courant induit dans la bobine du moteur. A partir du temps $t_1$ et jusqu'à l'arrivée de la prochaine impulsion motrice, la bobine est mise en court-circuit pour la même raison que celle exposée à propos du cas 1. Il faut remarquer ici que le courant i est beaucoup plus grand (pointe de l'ordre de 1 300 $\mu$ A) que celui existant pour le sens préférentiel. Comme le sens opposé au sens préférentiel est occasionnel, cette augmentation de courant n'entraîne qu'un raccourcissement négligeable de la durée de vie de la pile. La courbe $\alpha$ montre que le rotor a progressé d'un pas dans le sens opposé au sens préférentiel ($\alpha = -180°$) et qu'après environ 30 ms le rotor s'est stabilisé à son nouveau point de stationnement comme l'indique aussi la vitesse angulaire $\omega$ qui est tombée à zéro. La figure 7b représente les diagrammes des couples moteur (Cab) et de positionnement (Ca) ainsi que la vitesse angulaire $\omega$ en fonction de la position angulaire $\alpha$ du rotor et pour les mêmes conditions de charge de 0,2 $\mu$ Nm. Comme pour les cas précédents, le diagramme $\omega$ porte en plus une échelle des temps en ms. Ce troisième cas est celui qui se présente quand on désire remettre rapidement la montre à l'heure ou que l'on désire encore corriger le fuseau horaire.

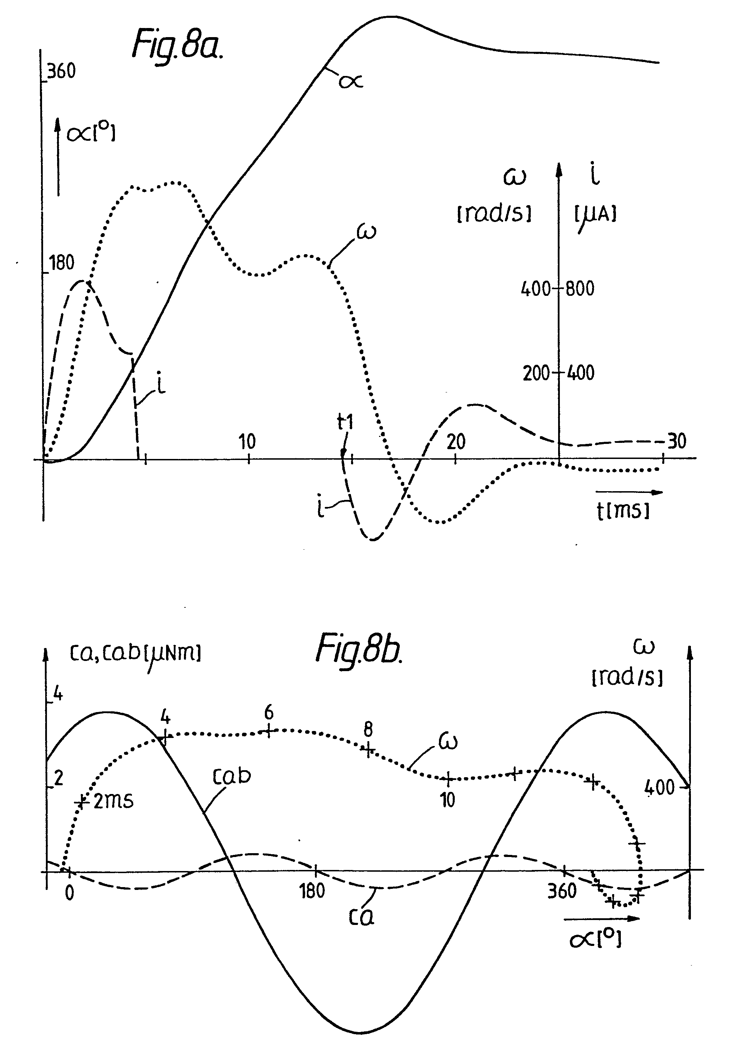

Cas 4. Comme pour le cas 2, on suppose qu'à la suite d'un choc par exemple, le rotor a progressé accidentellement d'un pas. On se trouve alors dans la situation présentée dans les figures 1b et 1c. Le moteur va recevoir une impulsion positive qui va le faire progresser dans le sens préférentiel. Les figures 8a et 8b montrent comment réagit ce moteur à cette impulsion positive, toutes les autres conditions de couplage des enroulements étant égales à celles décrites dans le cas 3 ci-dessus. La bobine reçoit une impulsion de fort courant dans le sens préférentiel, ce qui provoque une vitesse angulaire élevée et le franchissement successif de deux pas pour une seule impulsion ($\alpha = +360°$). La prochaine impulsion, négative cette fois, replacera le moteur dans les conditions de fonctionnement pour une marche dans le sens opposé au sens préférentiel, comme expliquées à propos du cas 3.

Tous les graphiques présentés en figures 5a à 8b montrent clairement que le système de couplage des deux bobines, objet de l'invention, agit avec sûreté dans un sens comme dans l'autre : dans le sens préférentiel, il permet une construction optimale du moteur avec un consommation minimale ; dans le sens opposé au sens préférentiel, il permet un positionnement énergique grâce au courant développé dans les bobines mises en parallèle. On voit également que, à la suite d'un choc appliqué au rotor ou encore à une augmentation subite de la charge, le système ne réagit pas en réponse à une impulsion de mauvais sens dans le sens préférentiel ou réagit au contraire deux fois seulement en réponse à une impulsion de mauvais sens dans le sens opposé au sens préférentiel, ce qui, pour l'usage qu'on veut en faire, ne prête pas à conséquence.

Enfin la figure 10 est un schéma d'alimentation du moteur selon l'invention. Les bobines 5 et 6 sont alimentées par la tension U. Les interrupteurs $T_1$ à $T_4$ produisent les signaux bipolaires tels que représentés en figure 1b ou 9. Ils assurent également la mise en circuit ouvert ou en court-circuit des bobines du moteur. Les interrupteurs $T_5$ à $T_7$ assurent le couplage série parallèle des deux bobines. Suivant qu'il s'agit de sens préférentiel ou de sens opposé au sens préférentiel, on aura les situations suivantes :

### Sens préférentiel

| | $T_1$ | $T_2$ | $T_3$ | $T_4$ | $T_5$ | $T_6$ | $T_7$ |
|---|---|---|---|---|---|---|---|
| **Impulsion positive** | | | | | | | |
| 0 - 10 ms | fermé | fermé | ouvert | ouvert | fermé | ouvert | ouvert |
| 10 ms - 1 s | fermé | ouvert | fermé | ouvert | fermé | ouvert | ouvert |
| **Impulsion négative** | | | | | | | |
| 0 - 10 ms | ouvert | ouvert | fermé | fermé | fermé | ouvert | ouvert |
| 10 ms - 1 s | fermé | ouvert | fermé | ouvert | fermé | ouvert | ouvert |

### Sens opposé au sens préférentiel

| | $T_1$ | $T_2$ | $T_3$ | $T_4$ | $T_5$ | $T_6$ | $T_7$ |
|---|---|---|---|---|---|---|---|
| **Impulsion positive** | | | | | | | |
| 0 - 4,5 ms | fermé | fermé | ouvert | ouvert | ouvert | fermé | fermé |
| 4,5 ms - 14,5 ms | ouvert | ouvert | ouvert | ouvert | ouvert | fermé | fermé |
| 14,5 ms - 1 s | fermé | ouvert | fermé | ouvert | ouvert | fermé | fermé |
| **Impulsion négative** | | | | | | | |
| 0 - 4,5 ms | ouvert | ouvert | fermé | fermé | ouvert | fermé | fermé |
| 4,5 ms - 14,5 ms | ouvert | ouvert | ouvert | ouvert | ouvert | fermé | fermé |
| 14,5 ms - 1 s | fermé | ouvert | fermé | ouvert | ouvert | fermé | fermé |

Dans les techniques actuelles se sont des transistors qui jouent le rôle des interrupteurs. Ils sont commandés par des signaux émis du diviseur de fréquence.

**Revendications**

1. Moteur électromagnétique pas à pas, monophasé bipolaire, pour pièce d'horlogerie, à mouvement rotatif à deux sens de rotation, comprenant un stator (4a, 4b) réalisé en matériau ferromagnétique doux et un rotor (1) constitué par un aimant ayant au moins une paire de pôles, caractérisé par le fait qu'il comprend deux enroulements (5, 6) bobinés sur le circuit magnétique du stator, qu'en réponse à un premier type d'impulsions simples, de polarité alternée, le rotor est entraîné dans un premier sens quand les deux dits enroulements sont connectés en série et qu'en réponse à un second type d'impulsions simples, de polarité alternée et de signe opposé au signe des impulsions formant ledit premier type d'impulsions, le rotor est entraîné dans un second sens opposé audit premier sens quand les deux dits enroulements sont connectés en parallèle.

2. Moteur selon la revendication 1, caractérisé par le fait que le rotor entraîne les aiguilles de la pièce d'horlogerie pour afficher le temps quand lesdits enroulements du moteur reçoivent ledit premier type d'impulsions.

3. Moteur selon la revendication 1, caractérisé par le fait que le circuit magnétique comprend un noyau sur lequel sont bobinés côte à côte les deux dits enroulements.

4. Moteur selon la revendication 1, caractérisé par le fait que le circuit magnétique comprend un noyau sur lequel sont bobinés l'un sur l'autre les deux dits enroulements.

5. Moteur selon la revendication 1, caractérisé par le fait que le circuit magnétique comprend deux noyaux, chacun comportant l'un des deux dits enroulements.

6. Moteur selon la revendication 1, caractérisé par le fait que, lorsque le rotor est entraîné par le premier type d'impulsions, les deux dits enroulements sont mis en court-circuit pendant la période qui sépare la fin d'une impulsion et le début de l'impulsion suivante.

7. Moteur selon la revendication 6, caractérisé par le fait que la durée de l'impulsion de premier type est comprise entre 4 et 12 ms.

8. Moteur selon la revendication 1, caractérisé par le fait que, lorsque le rotor est entraîné par le second type d'impulsions, les deux dits enroulements sont d'abord mis en circuit ouvert pendant la période qui sépare la fin d'une impulsion et un temps $t_1$, puis mis en court-circuit pendant la période qui sépare ledit temps $t_1$ et le début de l'impulsion suivante.

9. Moteur selon la revendication 8, caractérisé par le fait que la durée de l'impulsion de second type est comprise entre 2 et 6 ms.

10. Moteur selon la revendication 8, caractérisé par le fait que le temps $t_1$ a une valeur comprise entre 5 et 18 ms.

## Claims

1. Single phase bipolare electromagnetic stepping motor for timepiece use being capable of rotation in both senses comprising a stator (4a, 4b) formed of a soft ferromagnetic material and a rotor (1) constituted by a magnet having at least one pair of poles, characterized in that two windings (5, 6) are provided in respect of the stator magnetic circuit arranged so that in response to a first type of applied single pulses of alternate polarity the rotor is driven in a first sense when said two windings are series connected and in response to a second type of applied single pulses of alternate polarity being of opposite phase to the phase of the first type of pulses the rotor is driven in an opposite sense when said two windings are connected in parallel.

2. Motor as set forth in claim 1, characterized in that the rotor is arranged to drive time indicating hands for time display when said windings receive pulses of said first type.

3. Motor as set forth in claim 1, characterized in that the magnetic circuit includes a core on which said windings are placed side-by-side.

4. Motor as set forth in claim 1, characterized in that the magnetic circuit includes a core on which said windings are placed one over the other.

5. Motor as set forth in claim 1, characterized in that the magnetic circuit includes two cores each carrying one of said windings.

6. Motor as set forth in claim 1, characterized in that both windings are short-circuited in ther interval separating the end of one pulse and the beginning of the next succeeding pulse when the rotor is driven by the first type of applied pulses.

7. Motor as set forth in claim 6, characterized in that the duration of the first type pulse is between 4 ms and 12 ms.

8. Motor as set forth in claim 1, characterized in that both windings are initially open-circuited during a period separating the end of a pulse and a time $t_1$, then short-circuited during a period separating said time $t_1$ and the beginning of the next succeeding pulse when the rotor is driven by the second type of applied pulses.

9. Motor as set forth in claim 8, characterized in that the duration of the second type pulse is between 2 ms and 6 ms.

10. Motor as set forth in claim 8, characterized in that the time $t_1$ is between 5 ms and 18 ms.

## Ansprüche

1. Zweipoliger einphasiger Schrittmotor für Uhrwerke mit zwei Drehrichtungen, der einen Stator (4a, 4b) aus weichem ferromagnetischen Material und einen Rotor (1) aufweist, der aus einem Magneten mit wenigstens einem Paar Polen besteht, dadurch gekennzeichnet, daß er zwei Wicklungen (5, 6) aufweist, die auf dem magnetischen Kreis des Stators aufgewickelt sind, daß als Funktion einer ersten Art einfacher Impulse abwechselnder Polarität der Rotor in einer ersten Richtung angetrieben wird, sofern die beiden genannten Wicklungen in Serie geschaltet sind und daß als Funktion einer zweiten Art einfacher Impulse abwechselnder Polarität und entgesetzten Vorzeichens zum Vorzeichen der die erste Art Impulse bildenden Impulse der Rotor in einer zweiten Richtun angetrieben wird, die der ersten Richtung entgegengesetzt ist, sofern die beiden Wicklungen parallel geschaltet sind.

2. Motor nach Anspruch 1, dadurch gekennzeichnet, daß der Rotor die Zeiger des Uhrwerks antreibt zur Zeitanzeige, wenn die Wicklungen des Motors die erste Art Impulse empfangen.

3. Motor nach Anspruch 1, dadurch gekennzeichnet, daß der magnetische Kreis einen Kern aufweist, auf den die beiden Wicklungen nebeneinander aufgewickelt sind.

4. Motor nach Anspruch 1, dadurch gekennzeichnet, daß der magnetische Kreis einen Kern aufweist, auf den die beiden Wicklungen übereinander aufgewickelt sind.

5. Motor nach Anspruch 1, dadurch gekennzeichnet, daß der magnetische Kreis zwei Kerne aufweist, deren jeder eine der beiden Wicklungen aufweist.

6. Motor nach Anspruch 1, dadurch gekennzeichnet, daß, wenn der Motor von der ersten Art Impulse angetrieben ist, die beiden Wicklungen während derjenigen Periode kurzgeschlossen sind, die das Ende eines Impulses und den Beginn des nächstfolgenden Impulses trennt.

7. Motor nach Anspruch 6, dadurch gekennzeichnet, daß die Dauer der Impulse der ersten Art zwischen 4 und 12 ms beträgt.

8. Motor nach Anspruch 1, dadurch gekennzeichnet, daß, wenn der Motor von der zweiten Art Impulse angetrieben ist, die beiden genannten Wicklungen zuerst in Offen-Schaltung sind während der Periode, die das Ende eines Impulses und eine Zeit ($t_1$) trennt und danach kurzgeschlossen sind während der Periode, die die genannte Zeit ($t_1$) und den Beginn des nächstfolgenden Impulses trennt.

9. Motor nach Anspruch 8, dadurch gekennzeichnet, daß die Dauer der Impulse der zweiten Art zwischen 2 und 6 ms beträgt.

10. Motor nach Anspruch 8, dadurch gekennzeichnet, daß die Zeit ($t_1$) einen Wert zwischen 5 und 18 ms aufweist.

**Fig.1a.**

**Fig.1b.**

**Fig.1c.**

1

*Fig. 2.*

*Fig. 3.*

*Fig. 4.*

Fig.5a.

Fig.5b.

Fig. 6a.

Fig. 6b.

4

Fig.7a.

Fig.7b.

0 026 002

Fig.8a.

Fig.8b.

6

*Fig.9.*

*Fig.10.*